**Europäisches Patentamt**

(19) **European Patent Office**

**Office européen des brevets**

(11) Numéro de publication: **0 045 696**
**B1**

(12) **FASCICULE DE BREVET EUROPEEN**

(45) Date de publication du fascicule du brevet:
16.10.85

(51) Int. Cl.⁴: **G 21 F 9/02**

(21) Numéro de dépôt: **81401243.1**

(22) Date de dépôt: **31.07.81**

(54) Procédé et dispositif pour le remplacement d'un filtre placé dans un caisson sans rupture du confinement de la zone contaminée.

(30) Priorité: **06.08.80 FR 8017376**

(43) Date de publication de la demande:
**10.02.82 Bulletin 82/6**

(45) Mention de la délivrance du brevet:
**16.10.85 Bulletin 85/42**

(84) Etats contractants désignés:
**BE CH DE GB IT LI NL SE**

(56) Documents cités:
**FR - A - 2 327 713**
**FR - A - 2 338 735**
**US - A - 3 354 616**

(73) Titulaire: **COMMISSARIAT A L'ENERGIE ATOMIQUE Etablissement de Caractère Scientifique Technique et Industriel, B.P. 510, F-75752 Paris Cedex 15 (FR)**

(72) Inventeur: **Müller, Georges, 4, rue Edme Verniquet, F-21100 Dijon (FR)**

(74) Mandataire: **Mongrédien, André et al, c/o BREVATOME 25, rue de Ponthieu, F-75008 Paris (FR)**

ACTORUM AG

## Description

La présente invention a trait au remplacement d'un filtre placé dans un caisson.

Plus précisément, elle a pour objet de procédé et un dispositif permettant le remplacement d'un filtre placé entre la zone contaminée et la zone non contaminée d'un caisson sans qu'il y ait rupture du confinement de la zone contaminée.

Il existe dans l'industrie de nombreuses installations de ventilation destinées à purifier des atmosphères contaminées, soit par des poussières radioactives, soit par des substances particulièrement toxiques.

Le principal problème posé par ce genre d'installation est le remplacement des filtres sans risque de contamination. On connaît des procédés dans lesquels le confinement de la zone contaminée est interrompu pendant le remplacement du filtre. Par exemple, le document US-A-3 354 616 décrit un tel procédé dans lequel on utilise un sac en plastique disposé autour d'une porte de visite, du côté intérieur du caisson. Pour remplacer le filtre, on ouvre la porte et on pousse le filtre usagé à l'intérieur du sac qui a été préalablement déployé. On soude le sac et on le coupe pour évacuer le filtre. On amène ensuite le filtre neuf, qui est placé dans un sac que l'on fixe de manière étanche autour de l'ouverture prévue dans le caisson. On arrache la membrane qui est restée depuis l'opération précédente et on l'évacue après l'avoir placée au fond d'une poche prévue dans le sac entourant le nouveau filtre. Celui-ci est mis en place et le sac qui l'entourait est poussé à l'intérieur du caisson, ses bords étant toujours appliqués de manière étanche autour de l'ouverture prévue dans la paroi, et on remet la porte de visite en place.

Si ce procédé permet de protéger l'opérateur, qui se trouve à l'extérieur du caisson, la partie amont de celui-ci n'est pas séparée de la partie aval pendant le remplacement du filtre et la contamination se répand dans la partie aval.

Il existe d'autres procédés qui permettent de maintenir le confinement de la zone contaminée pendant le remplacement du filtre. Le document FR-A-2 338 735 décrit un procédé dans lequel le filtre est guidé par un manchon prévu du côté aval d'une tôle de bouchage. Une manchette en plastique ouverte à ses deux extrémités a une extrémité fixée au filtre et l'autre au manchon. Pour remplacer le filtre, on extrait celui-ci en déployant la manchette que l'on soude et que l'on coupe, obtenant ainsi une membrane qui bouche l'ouverture de la tôle de bouchage. On amène le nouveau filtre qui est équipé lui aussi d'une manchette en plastique ouverte à ses deux extrémités dont l'une entoure le filtre de manière étanche et dont l'autre est fixée au manchon prévu sur la tôle de bouchage. La membrane est arrachée et placée dans une poche prévue dans la nouvelle manchette et le filtre neuf est appliqué contre la tôle de bouchage, la manchette qui l'entoure restant en permanence en place.

Si ce procédé permet de maintenir le confinement de la zone contaminée pendant le remplacement du filtre, il présente un inconvénient important dû au fait que la manchette protectrice reste en permanence en place une fois que le filtre neuf est installé. En effet, cette manchette étant généralement en matière plastique, elle est mince et fragile et risque de se déchirer à cause des vibrations dues au passage de l'air, de la contamination due à la membrane placée dans la poche et des variations de température car la plupart des matières plastiques ne résistent pas à une température élevée.

Le document FR-A-2 327 713 décrit un procédé semblable et qui présente les mêmes défauts.

La présente invention a justement pour but d'éliminer ces inconvénients en proposant un procédé et un dispositif qui non seulement permettent de maintenir le confinement de la zone contaminée pendant le remplacement du filtre mais encore évitent tout risque de contamination ultérieure entre deux remplacements.

Le procédé objet de l'invention s'applique au remplacement d'un filtre placé dans un caisson ayant au moins une zone contaminée et une zone non contaminée séparées par une tôle de bouchage comportant au moins une ouverture devant laquelle est fixé le filtre, du côté de la zone non contaminée, le filtre étant guidé au moyen d'un cadre support lui-même fixé de manière étanche sur la tôle de bouchage autour de ladite ouverture, du côté de la zone non contaminée, et étant appliqué de manière étanche, soit directement, soit indirectement, sur la tôle de bouchage. De manière connue, ce procédé comporte les étapes suivantes:

— on entoure le filtre d'un sac étanche en matière souple à partir de la zone non contaminée et on fixe ledit sac de manière étanche sur le pourtour extérieur du cadre support,

— on enlève le filtre du cadre support et on le place au fond du sac étanche,

— on soude le sac étanche en deux endroits et on le coupe entre les deux soudures de manière à obtenir d'une part un sac hermétiquement fermé contenant le filtre et d'autre part une membrane étanche séparant les zones contaminée et non contaminée du caisson, et

— on évacue hors du caisson le filtre placé dans le sac.

Selon l'invention, le procédé comporte en outre les étapes suivantes:

— à partir de la zone non contaminée du caisson, on fixe de manière étanche un cadre support supplémentaire sur le cadre support, ce cadre support supplémentaire ayant au moins une aile sur laquelle un nouveau filtre peut être appliqué de manière étanche et au moins une aile servant à guider le nouveau filtre, jouant ainsi le même rôle que le cadre support,

— on introduit le nouveau filtre du côté de la zone non contaminée du caisson,

— on applique le nouveau filtre de manière étanche sur l'aile du cadre support supplémentaire prévue à cet effet, et

– on retire la membrane étanche à partir de la zone contaminée du caisson.

La présente invention a également pour objet un dispositif pour le remplacement d'un filtre placé dans un caisson par un nouveau filtre, ledit caisson ayant au moins une zone contaminée et une zone non contaminée séparées par une tôle de bouchage comportant une ouverture.

Selon la principale caractéristique de ce dispositif, celui-ci comporte au moins un cadre support de base, ce dernier ayant au moins une aile permettant de le fixer de manière étanche sur la tôle de bouchage du côté de la zone non contaminée du caisson autour de l'ouverture de ladite tôle de bouchage, au moins une aile permettant la fixation du cadre support supplémentaire et au moins une aile permettant le guidage du filtre, ce dispositif comportant en outre au moins un jeu de cadres supports supplémentaires ayant chacun au moins une aile permettant de le fixer de manière étanche sur le cadre support de base ou sur un autre cadre support supplémentaire, au moins une aile permettant la fixation, de manière étanche, d'un autre cadre support supplémentaire, au moins une aile permettant de guider le nouveau filtre et au moins une aile sur laquelle le nouveau filtre peut être appliqué de manière étanche.

Ce procédé et ce dispositif permettent le remplacement du filtre sans rupture du confinement de la zone contaminée grâce à la membrane étanche qui sépare les deux zones pendant l'opération.

Selon une autre caractéristique de l'invention, l'étanchéité entre le cadre support de base et la tôle de bouchage d'une part, l'étanchéité entre deux cadres supports supplémentaires ou entre un cadre support supplémentaire et le cadre support de base est assurée par des joints au Silastène®.

L'invention a également pour objet un procédé d'évacuation d'un cadre support de base et d'au moins un cadre support supplémentaire utilisés dans un dispositif pour le remplacement d'un filtre placé dans un caisson ayant au moins une zone contaminée et une zone non contaminée séparées par une tôle de bouchage comportant une ouverture, lesdits cadres supports étant empilés les uns sur les autres et l'empilement ayant atteint une hauteur maximale après un certain nombre de remplacements de filtre. Selon l'invention, ce procédé comporte les étapes suivantes:

– au cours du dernier remplacement, le filtre étant évacué et ladite ouverture étant obturée par une membrane étanche, on entoure l'empilement de cadres supports d'un sac étanche en matière souple que l'on fixe de manière étanche sur le pourtour extérieur d'un cadre d'évacuation, ce dernier étant fixé de manière étanche sur la tôle de bouchage du côté de la zone non contaminée du caisson et extérieurement au cadre support de base,

– on désolidarise le cadre support de base de la tôle de bouchage et on place l'empilement de cadres supports au fond du sac étanche,

– on soude ledit sac en deux endroits et on le coupe entre les deux soudures de manière à obtenir d'une part un sac hermétiquement fermé contenant l'empilement de cadres supports et, d'autre part, une membrane étanche séparant la zone contaminée (2) et la zone non contaminée (3) du caisson,

– on décontamine la caisson, on enlève la membrane étanche précitée et on remet en place le ou les cadres supports de base (7).

L'invention a encore pour objet un dispositif pour l'évacuation d'un cadre support de base et d'au moins un cadre support supplémentaire utilisés dans un dispositif pour le remplacement d'un filtre placé dans un caisson ayant au moins une zone contaminée et une zone non contaminée séparées par une tôle de bouchage comportant une ouverture. Selon l'invention, ce dispositif comporte au moins un cadre d'évacuation fixé de manière étanche sur la tôle de bouchage du côté de la zone non contaminée du caisson et extérieurement au cadre support de base, ledit cadre d'évacuation ayant au moins une aile permettant de le fixer de manière étanche sur la tôle de bouchage et au moins une aile permettant la fixation de manière étanche d'un sac étanche en matière souple utilisé pour l'évacuation des cadres supports (7, 19).

De préférence, l'étanchéité entre le cadre d'évacuation et la tôle de bouchage est assurée au moyen d'un joint au Silastène®.

D'autres caractéristiques et avantages de l'invention apparaîtront mieux à l'aide de la description qui va suivre, donnée à titre purement illustratif et nullement limitatif, en référence aux dessins annexés dans lesquels:

la fig. 1 est une vue de dessus schématique en coupe montrant le filtre placé entre la zone contaminée et la zone non contaminée du caisson,

les figs 2a à 2e sont des vues de dessus schématiques en coupe montrant les différentes étapes du procédé objet de l'invention, et

les figs 3a et 3b sont des vues schématiques en coupe montrant le profil des cadres supports de base et des cadres supports supplémentaires utilisés dans le procédé objet de l'invention.

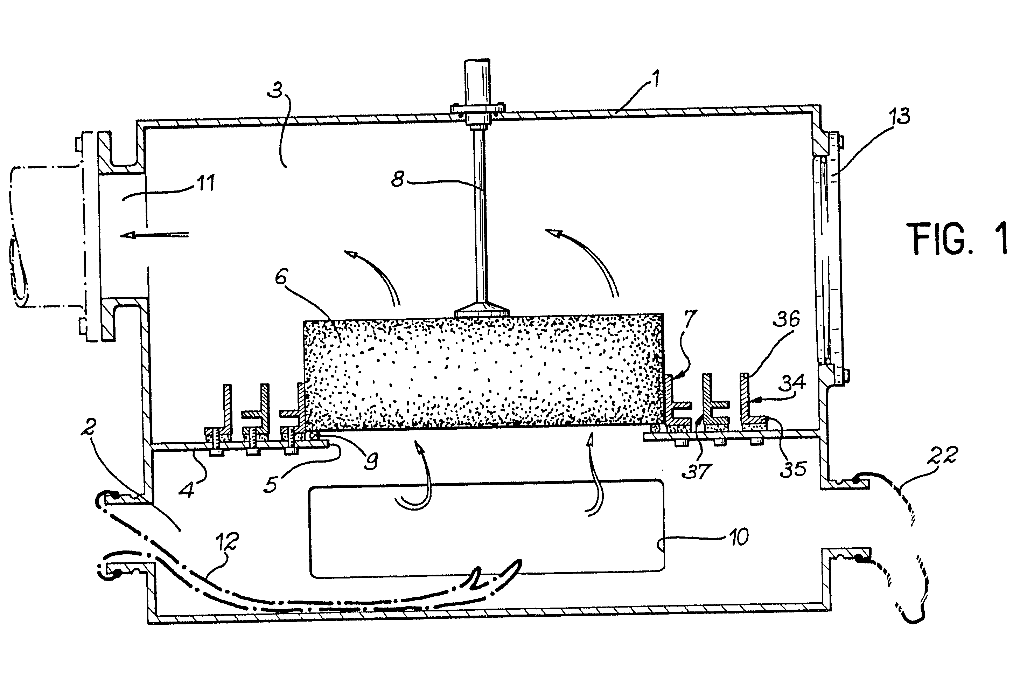

Sur la fig. 1, on voit le caisson 1 qui comprend une zone contaminée 2 et une zone non contaminée 3 séparées par une tôle de bouchage 4. Celle-ci comporte une ouverture 5 devant laquelle est placé le filtre 6, du côté de la zone non contaminée. Le filtre est positionné grâce à un cadre support 7 fixé à la tôle de bouchage du côté de la zone non contaminée, tout autour de l'ouverture 5. Sur la figure, on voit également un piston 8 qui permet d'appliquer le filtre 6 de manière étanche contre la tôle de bouchage 4, l'étanchéité étant assurée par un joint 9 qui peut être intégré au filtre 6 lors de sa fabrication.

L'air contaminé arrive dans le caisson à travers une ouverture 10, passe de la zone contaminée à la zone non contaminée à travers le filtre 6 et est évacué par une sortie 11. Un ou plusieurs gants 12, du genre de ceux utilisés dans les boîtes à gants, permettent de travailler dans la partie contaminée du caisson tandis qu'une porte de visite 13 donne accès au filtre 6 du côté de la zone non contaminée 3.

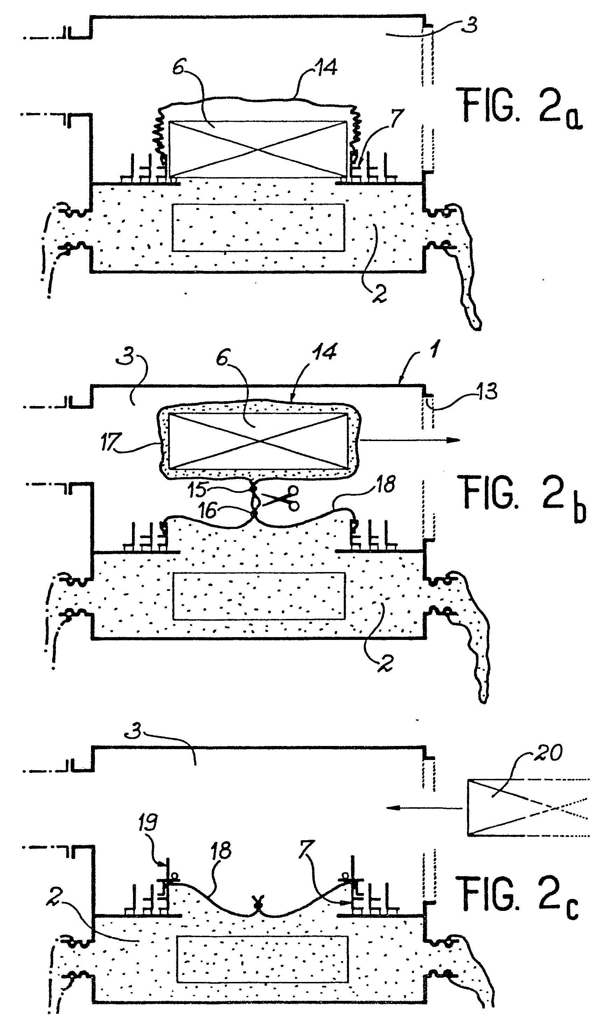

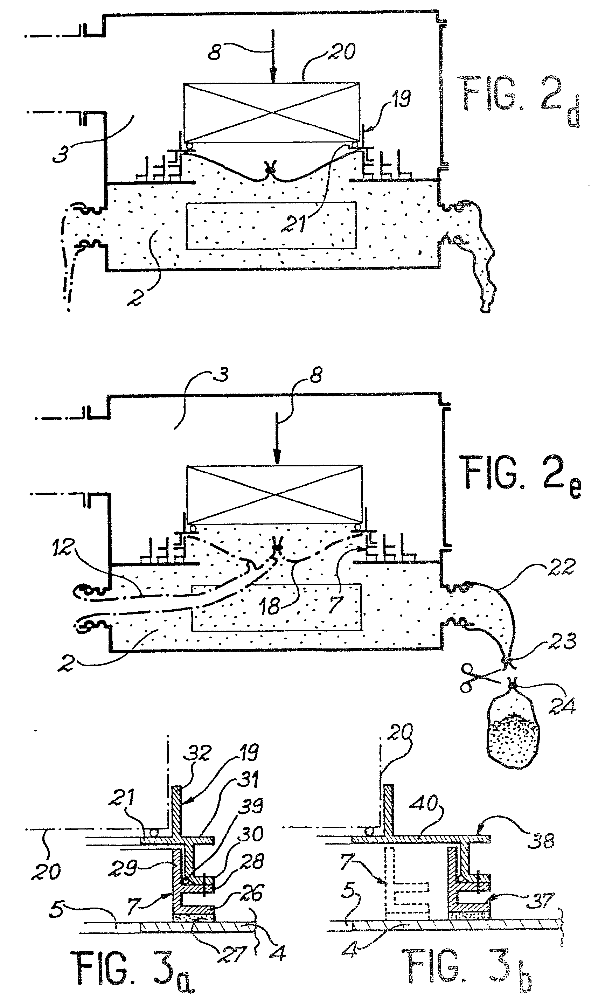

Les figs 2a à 2e illustrent les différentes étapes du procédé de remplacement objet de l'invention.

Une opération de remplacement selon le procédé objet de l'invention se déroule de la manière suivante: à partir de la zone non contaminée 3, on entoure le filtre 6 d'un sac étanche 14 en matière souple, par exemple un sac en vinyle (fig. 2a). Il va de soi que pour pouvoir entourer complètement le filtre, le piston 8 doit être retiré pendant un court instant: pour qu'il n'y ait pas de rupture d'étanchéité on peut soit maintenir le filtre à la main pendant que le piston est retiré, soit utiliser deux pistons qu'on retire l'un après l'autre.

Ensuite, on fixe le sac étanche 14 sur le pourtour extérieur du cadre support 7 avec une bande adhésive ou tout autre moyen assurant l'étanchéité. Puis on enlève le filtre 6 et on le place au fond du sac 14: on soude alors ce dernier en deux endroits 15 et 16 et on le coupe entre les deux soudures 15 et 16 (fig. 2b). Ainsi, on obtient d'une part, un sac hermétiquement fermé contenant le filtre 6, et d'autre part, une membrane étanche 18 séparant les zones contaminée 2 et non contaminée 3 du caisson.

Le filtre est alors évacué par la porte de visite 13 puis, à partir de la zone non contaminée 3, on fixe de manière étanche un cadre support supplémentaire 19 sur le cadre support 7, la membrane 18 étant toujours en place (fig. 2c).

Toujours à partir de la zone non contaminée 3, on introduit alors un nouveau filtre 20 identique au filtre 6 et, grâce au piston 8, on l'applique de manière étanche sur l'aile 21 du cadre supplémentaire 19, prévue à cet effet (fig. 2d).

Enfin, à l'aide du gant 12, on arrache la membrane 18 du cadre support 7 à partir de la zone contaminée 2 et on l'évacue, par exemple en la poussant au fond d'une manche en vinyle 22 que l'on soude en deux endroits 23, 24 et que l'on coupe entre les deux soudures 23, 24 (fig. 2e).

Lorsque le filtre 20 devra être remplacé à son tour, on recommencera le cycle qu'on vient de décrire, le filtre 20 jouant le même rôle que le filtre 6 et le cadre support supplémentaire 19 jouant le même rôle que le cadre support 7.

La fig. 3a montre plus en détail le profil du cadre support de base 7. Celui-ci comporte d'abord une aile 26 permettant de le fixer de manière étanche sur la tôle de bouchage 4, par exemple à l'aide d'un joint au silastène 27.

Le cadre 7 comporte également une aile 28 permettant la fixation du premier cadre support supplémentaire 19, par exemple par boulonnage, et une aile 29 permettant de guider le premier filtre qui est, lui, directement appliqué sur la tôle de bouchage 4.

Sur cette même fig. 3a, on voit également le profil d'un cadre support supplémentaire 19. Celui-ci comporte d'abord une aile 30 permettant de le fixer de manière étanche sur l'aile 28 du cadre support de base 7, l'étanchéité pouvant être assurée par un joint au silastène 39, et une aile 31 permettant la fixation de l'aile 30 d'un autre cadre support supplémentaire, l'étanchéité pouvant encore être assurée par un joint au silastène. Le cadre support supplémentaire 19 comporte également une aile 32 servant à guider le nouveau filtre 20 et une aile 21 sur laquelle le filtre 20 est appliqué de manière étanche.

Comme à chaque remplacement de filtre on ajoute un cadre support supplémentaire 19, on voit qu'au bout d'un certain nombre de remplacements l'empilement de cadres atteindra une hauteur maximale et il sera nécessaire d'évacuer tous ces cadres.

Le procédé d'évacuation des cadres est fondé sur le même principe que le procédé de remplacement des filtres. Pour cela, on évacue le dernier filtre après l'avoir placé dans un sac étanche hermétiquement fermé, selon les premières étapes du procédé de remplacement objet de la présente invention, puis la membrane 18 étant encore en place, on entoure tous les cadres supports d'un sac étanche en matière souple que l'on vient fixer de manière étanche sur le pourtour extérieur d'un cadre d'évacuation 34, lui-même fixé de manière étanche à la tôle de bouchage 4 du côté de la zone non contaminée 3 et extérieurement au cadre support 7 (fig. 1): ensuite, on désolidarise le cadre support de base 7 de la tôle de bouchage 4 et on évacue l'empilement de cadres de la même façon qu'on évacue les filtres usagés en les plaçant au fond du sac étanche que l'on soude en deux endroits.

On décontamine alors le caisson et on replace le cadre support de base 7.

Sur la fig. 1, on voit que le cadre d'évacuation 34 comporte une aile 35 permettant de le fixer de manière étanche sur la tôle de bouchage (par exemple avec un joint au Silastène[®]) et une aile 36 sur laquelle on vient fixer de manière étanche le sac utilisé pour évacuer l'empilement de cadres supports.

Dans le cas d'un caisson à remplacements fréquents, il peut être utile de gagner du temps en rendant moins fréquentes les opérations de décontamination. Pour cela le caisson est équipé au départ de deux cadres supports de base 7 et 37, ce dernier étant fixé extérieurement au cadre 7. Le cadre 7 servira à une première série de filtres, puis lorsqu'il faudra évacuer l'empilement de cadres correspondant, c'est le 2ème cadre support de base 37 qui servira de cadre d'évacuation. Quand on aura retiré le premier empilement de cadres supports, les deux zones du caisson étant séparées par une membrane étanche, on viendra fixer un cadre support supplémentaire 38 sur le cadre support de base 37 (fig. 3b). Mais comme celui-ci est décalé par rapport au cadre 7, il faudra utiliser des cadres supports supplémentaires 38 de dimensions légèrement différentes de celles des cadres supports 19 pour pouvoir utiliser les mêmes filtres dans le caisson. Pour cela, les cadres 38 devront avoir une aile 40 suffisamment large pour que les deux conditions suivantes soient remplies: pouvoir fixer le cadre 38 sur le cadre 37 et que le filtre 20 se trouve en face de l'ouverture 5 de la tôle de bouchage 4.

Il est bien entendu que lorsqu'il faudra évacuer l'empilement de cadres supports 37 et 38, on utilisera à nouveau le cadre d'évacuation 34 et il faudra alors décontaminer le caisson, mais le fait d'utiliser deux cadres supports de base permet d'économiser une opération de décontamination sur deux (éventuellement, on peut prévoir un nombre de cadres supports de base encore plus grand).

Le procédé objet de l'invention présente de nombreux avantages: il permet le remplacement de filtres sans rupture du confinement de la zone contaminée et donc sans risque pour l'opérateur. D'autre part, il est simple et facile à mettre en œuvre. Enfin, si les dimensions du caisson sont judicieusement calculées, on peut procéder à de nombreux remplacements sans avoir besoin de décontaminer le caisson, les décontaminations étant encore plus espacées si on utilise plusieurs cadres supports de base et plusieurs jeux de cadres supports supplémentaires.

Il va de soi que l'invention ne se limite pas à l'exemple de réalisation que l'on vient de décrire et qu'on peut en imaginer d'autres sans sortir pour autant du cadre des revendications.

Par exemple, on peut envisager des caissons ayant plusieurs zones contaminées et non contaminées séparées par des filtres ou plusieurs filtres placés sur une seule et même tôle de bouchage. Quant aux cadres supports, s'ils doivent pouvoir remplir toutes les fonctions évoquées précédemment, ils peuvent être de formes et de dimensions quelconques pour s'adapter à tout type de filtre, notamment de forme parallélépipédique ou cylindrique.

**Revendications**

1. Procédé de remplacement d'un filtre (6) placé dans un caisson (1) ayant au moins une zone contaminée (2) et une zone non contaminée (3) séparées par une tôle de bouchage (4) comportant au moins une ouverture (5) devant laquelle est fixé le filtre (6), du côté de la zone non contaminée (3), ledit filtre (6) étant guidé au moyen d'un cadre support (7) lui-même fixé de manière étanche sur la tôle de bouchage (4) autour de l'ouverture (5), du côté de la zone non contaminée (3), et étant appliqué de manière étanche, soit directement, soit indirectement, sur la tôle de bouchage (4), procédé du genre de ceux qui comportent les étapes suivantes:
— on entoure le filtre (6) d'un sac étanche (14) en matière souple à partir de la zone non contaminée (3) et on fixe ledit sac (14) de manière étanche sur le pourtour extérieur du cadre support (7),
— on enlève le filtre de cadre support (7) et on le place au fond du sac étanche (14),
— on soude le sac étanche (14) en deux endroits (15, 16) et on le coupe entre les deux soudures (15, 16) de manière à obtenir d'une part un sac hermétiquement fermé (17) contenant le filtre (6) et d'autre part une membrane étanche (18) séparant les zones contaminée (2) et non contaminée (3) du caisson, et
— on évacue hors du caisson (1) le filtre (6) placé dans le sac (14),
procédé caractérisé en ce qu'après l'évacuation du filtre (6), il comporte les étapes suivantes:
— à partir de la zone non contaminée (3) du caisson (1), on fixe de manière étanche un cadre support supplémentaire (19) sur le cadre support (7), ce cadre support supplémentaire (19) ayant au moins une aile (21) sur laquelle un nouveau filtre (20) peut être appliqué de manière étanche et au moins une aile (32) servant à guider le nouveau filtre (20), jouant ainsi le même rôle que le cadre support (7),
— on introduit le nouveau filtre (20) du côté de la zone non contaminée (3) du caisson (1),
— on applique le nouveau filtre (20) de manière étanche sur l'aile (21) du cadre support supplémentaire (19), et
— on retire la membrane étanche (18) à partir de la zone contaminée (2) du caisson (1).

2. Dispositif pour le remplacement d'un filtre (6) placé dans un caisson (1) par un nouveau filtre (20), ledit caisson (1) ayant au moins une zone contaminée (2) et une zone non contaminée (3) séparées par une tôle de bouchage (4) comportant une ouverture (5), caractérisé en ce qu'il comporte au moins un cadre support de base (7), ce dernier ayant au moins une aile (26) permettant de le fixer de manière étanche sur la tôle de bouchage (4) du côté de la zone non contaminée (3) du caisson (1), autour de l'ouverture (5), au moins une aile (28) permettant la fixation d'un cadre support supplémentaire (19) et au moins une aile (29) permettant le guidage du filtre (6), ce dispositif comportant en outre au moins un jeu de cadres supports supplémentaires (19) ayant chacun au moins une aile (30) permettant de le fixer de manière étanche sur le cadre support de base (7) ou sur un autre cadre support supplémentaire (19), au moins une aile (31) permettant la fixation, de manière étanche, d'un autre cadre support supplémentaire (19), au moins une aile (32) permettant de guider le nouveau filtre (20) et au moins une aile (21) sur laquelle le nouveau filtre (20) peut être appliqué de manière étanche.

3. Dispositif selon la revendication 2, caractérisé en ce que l'étanchéité entre le cadre support de base (7) et la tôle de bouchage d'une part, l'étanchéité entre deux cadres supports supplémentaires (19) ou entre un cadre support supplémentaire (19) et le cadre support de base (7) est assurée par des joints au Silastène® (27, 39).

4. Procédé d'évacuation d'un cadre support de base (7) et d'au moins un cadre support supplémentaire (19) utilisés dans un dispositif pour le remplacement d'un filtre (6) placé dans un caisson (1) ayant au moins une zone contaminée (2) et une zone non contaminée (3) séparées par une tôle de bouchage (4) comportant une ouverture (5), lesdits cadres supports (7, 19) étant empilés les uns sur les autres et l'empilement ayant atteint une hauteur maximale après un certain nombre de remplacements de filtre, caractérisé en ce qu'il comporte les étapes suivantes:

– au cours du dernier remplacement, le filtre (6) étant évacué-et l'ouverture (5) étant obturée par une membrane étanche (18), on entoure l'empilement de cadres supports (7, 19) d'un sac étanche en matière souple que l'on fixe de manière étanche sur le pourtour extérieur d'un cadre d'évacuation (34), ce dernier étant fixé de manière étanche sur la tôle de bouchage (4) du côté de la zone non contaminée (3) du caisson et extérieurement au cadre de support de base (7),

– on désolidarise le cadre support de base (7) de la tôle de bouchage et on place l'empilement de cadres supports (7, 19) au fond du sac étanche,

– on soude ledit sac en deux endroits et on le coupe entre les deux soudures de manière à obtenir d'une part un sac hermétiquement fermé contenant l'empilement de cadres supports et, d'autre part, une membrane étanche séparant la zone contaminée (2) et la zone non contaminée (3) du caisson,

– on décontamine le caisson, on enlève la membrane étanche précitée et on remet en place le ou les cadres supports de base (7).

5. Dispositif pour l'évacuation d'un cadre support de base (7) et d'au moins un cadre support supplémentaire (19) utilisés dans un dispositif pour le remplacement d'un filtre (6) placé dans un caisson (1) ayant au moins une zone contaminée (2) et une zone non contaminée (3) séparées par une tôle de bouchage (4) comportant une ouverture (5), caractérisé en ce qu'il comporte au moins un cadre d'évacuation (34) fixé de manière étanche sur la tôle de bouchage du côté de la zone non contaminée (3) du caisson et extérieurement au cadre support de base (7), ledit cadre d'évacuation (34) ayant au moins une aile (35) permettant de le fixer de manière étanche sur la tôle de bouchage et au moins une aile (36) permettant la fixation de manière étanche d'un sac étanche en matière souple utilisé pour l'évacuation des cadres supports (7, 19).

6. Dispositif selon la revendication 5, caractérisé en ce que l'étanchéité entre le cadre d'évacuation (34) et la tôle de bouchage (4) est assurée au moyen d'un joint au Silastène®.

**Claims**

1. Process for replacing a filter (6) located within a closed vessel (1) having at least one contaminated zone (2) and one non-contaminated zone (3) separated by a bulkhead (4) having at least one opening (5) against which is fixed a filter (6) on the non-contaminated zone side (3), said filter (6) being located by means of a support frame (7) which is itself fixed in fluid-tight manner to the bulkhead (4) around the opening (5), on the non-contaminated zone side (3) and being applied in fluid-tight manner, either directly or indirectly, to the bulkhead (4), the process being of the type which comprises the following steps:

– the filter (6) is surrounded by a fluid-tight bag (14) of flexible material in the non-contaminated zone (3) and said bag (14) is fixed in fluid-tight manner on the periphery of the support frame (7),

– the filter is separated from the support frame (7) and placed inside of the fluid-tight bag (14),

– the fluid-tight bag (14) is welded at two places (15, 16) and cut between the two welds (15, 16) to provide on the one hand a hermetically sealed bag (17) containing the filter, and on the other hand a fluid-tight membrane (18) separating the contaminated (2) and non-contaminated zones (3) of the sealed vessel, and

– the filter (6) within the bag (14) is removed from the fluid-tight vessel (1),

the process being characterized in that, after removal of the filter (6), it comprises the following steps:

– within the non-contaminated zone (3) of the sealed vessel (1) a supplementary support frame (19) is fixed in fluid-tight manner on the support frame (7), said supplementary support frame (19) having at least one flange (21) for application of a new filter (20) in fluid-tight manner, and at least one flange (32) acting to guide the new filter (20), thereby acting in the same way as the support frame (7),

– the new filter (20) is introduced from the non-contaminated zone (3) of the sealed vessel (1),

– the new filter (20) is applied in fluid-tight manner on the flange (21) of the supplementary support frame (19), and

– the fluid-tight membrane (18) is removed from the contaminated zone (2) of the sealed vessel (1).

2. Apparatus for the replacement of a filter (6) located within a closed vessel (1) by a new filter (20), said vessel (1) having at least one contaminated zone (2) and one non-contaminated zone (3) separated by a bulkhead (4) having an opening (5), characterized in that it comprises at least one base support frame (7), the latter having at least one flange (26) for fixing in fluid-tight manner on the bulkhead (4) in the non-contaminated zone (3) of the vessel (1), around the opening (5), at least one flange (28) permitting fixing of a supplementary support frame (19) and at least one flange (29) permitting location of the filter (6), said device additionally comprising at least one set of supplementary support frames (19) each having at least one flange (30) permitting it to be fixed in fluid-tight manner on the base support frame (7) or on another supplementary support frame (19), at least one flange (31) permitting it to be fixed in fluid-tight manner to another supplementary support frame (19), at least one flange (32) for guiding the new filter (20) and at least one flange (21) on which the new filter (20) can be applied in fluid-tight manner.

3. Apparatus according to Claim 2, characterized in that fluid-tightness between the base support frame (7) and the bulkhead on the one hand, fluid-tightness between two supplementary support frames (19) or between one supplementary support frame (19) and the base support frame (7) is provided by Silastene[ii] gaskets (27, 39).

4. Process for the removal of a base support frame (7) and at least one supplementary support frame (19) employed in a device for replacement of a filter (6) located in a sealed vessel (1) having at least one contaminated zone (2) and one non-contaminated zone (3) separated by a bulkhead (4) having an opening (5), said support frames (7, 19) being stacked one on the other, and the stack having reached a maximum height after a predetermined number of filter replacements, characterized in that it comprises the following steps:

– during the last replacement, the filter (6) having been removed and the opening (5) having been closed by a fluid-tight membrane (18), the stack of support frames (7, 19) is surrounded by a fluid-tight bag of flexible material which is fixed in fluid-tight manner to the periphery of a separation frame (34), said latter being fixed in fluid-tight manner on the bulkhead (4) on the non-contaminated zone side (3) of the vessel, and externally of the base support frame (7),

– the base support frame (7) is separated from the bulkhead and the stack of support frames (7, 19) is placed inside the fluid-tight bag,

– said bag is welded at two places and cut between the two welds whereby to obtain on the one hand a hermetically-sealed bag containing the stack of support frames, and on the other hand, a fluid-tight membrane separating the contaminated zone (2) from the non-contaminated zone (3) of the vessel, the vessel is decontaminated, the above-mentioned fluid-tight membrane is removed and the base support frame or frames is or are replaced.

5. Apparatus for the removal of the base support frame (7) and at least one supplementary support frame (19) employed in a device for replacement of a filter (6) located in a closed vessel (1) having at least one contaminated zone (2) and one non-contaminated zone (3) separated by a bulkhead (4) having an opening (5), characterized in that it comprises at least one removal frame (34) fixed in fluid-tight manner on the bulkhead on the non-contaminated zone (3) side of the vessel and externally of the base support frame (7), said removal frame (34) having at least one flange (35) enabling it to be fixed in fluid-tight manner on the bulkhead, and at least one flange (36) enabling fixation in fluid-tight manner of a fluid-tight bag of flexible material employed for removal of the support frames (7, 19).

6. Apparatus according to Claim 5, characterized in that fluid-tightness between the removal frame (34) and the bulkhead (4) is provided by means of a Silastene® gasket.

**Patentansprüche**

1. Verfahren zum Ersetzen eines in einem Tank (1) angeordneten Filters (6), welcher wenigstens einen kontaminierten Bereich (2) und einen nicht kontaminierten Bereich (3) aufweist, die durch ein Abdichtblech (4) voneinander getrennt sind, welches wenigstens eine Öffnung (5) aufweist, vor der das Filter (6) auf der Seite des nicht kontaminierten Bereiches (3) angebracht ist, wobei das Filter (6) mittels eines Tragrahmens (7) geführt ist, welcher selbst dichtend auf dem Abdichtblech (4) um die Öffnung (5) herum auf der Seite des nicht kontaminierten Bereiches (3) befestigt ist, und dichtend entweder direkt oder indirekt auf dem Abdichtblech (4) befestigt ist, wobei das Verfahren von der Art ist, welches die folgenden Schritte umfasst:

– man umgibt das Filter (6) von dem nicht kontaminierten Bereich (3) her mit einem dichten Sack (14) aus einem weichen Material und befestigt den Sack (14) dichtend auf der äusseren Umgebung des Tragrahmens (7),

– man entfernt das Filter von dem Tragrahmen (7) und ordnet es am Boden des dichten Sackes (14) an,

– man verschweisst den dichten Sack (14) an zwei Stellen (15, 16) und schneidet ihn zwischen den zwei Schweissstellen (15, 16) derart durch, dass einerseits ein vollständig geschlossener, das Filter (6) enthaltender Sack (17) und andererseits eine dichte Membran (18) erhalten wird, die den kontaminierten (2) und den nicht kontaminierten (3) Bereich des Tanks trennt, und

– man bringt das in dem Sack (14) angeordnete Filter (6) nach ausserhalb des Tanks (1), dadurch gekennzeichnet, dass nach dem Herausbringen des Filters (6) das Verfahren die folgenden Schritte aufweist:

– von dem nicht kontaminierten Bereich (3) des Tanks (1) her befestigt man dichtend einen zusätzlichen Tragrahmen (19) auf dem Tragrahmen (7), wobei der zusätzliche Tragrahmen (19) wenigstens einen Flansch (21), auf dem das neue Filter (20) dichtend befestigt werden kann, und wenigstens einen Flansch (32) aufweist, der zum Führen des neuen Filters (20) dient und somit die gleiche Rolle wie der Tragrahmen (7) spielt,

– man führt das neue Filter (20) von der Seite des nicht kontaminierten Bereiches (3) des Tanks (1) ein,

– man befestigt das neue Filter (20) abdichtend auf dem Flansch (21) des zusätzlichen Tragrahmens (19), und

– man zieht die dichte Membran (18) von dem kontaminierten Bereich (2) des Tanks (1) her zurück.

2. Vorrichtung zum Ersetzen eines in einem Tank (1) angeordneten Filters (6) durch ein neues Filter (20), wobei der Tank (1) wenigstens einen kontaminierten Bereich (2) und einen nicht kontaminierten Bereich (3) aufweist, die durch ein Abdichtblech (4), welches eine Öffnung (5) aufweist, voneinander getrennt sind, dadurch gekennzeichnet, dass die Vorrichtung wenigstens einen Grundtragrahmen (7) umfasst, der wenigstens einen Flansch (26), der die dichtende Befestigung auf dem Abdichtblech (4) auf der Seite des nicht kontaminierten Bereiches (3) des Tanks (1) um die Öffnung (5) herum erlaubt, wenigstens einen die Befestigung eines zusätzlichen Tragrahmens (19) ermöglichenden Flansch (28) und wenigstens einen Flansch (29) aufweist, der die Führung des Filters (6) ermöglicht, und dass die Vorrichtung ferner wenigstens einen Satz von zusätzlichen Tragrahmen (19) umfasst, von denen jeder wenigstens einen Flansch (30), der die dichtende Befestigung auf dem Grundtragrahmen (7) oder auf einem anderen zusätzlichen Tragrahmen (19), wenigstens einen die dichtende Befestigung eines anderen zusätzlichen Tragrahmens (19) erlaubenden Flansch (31), wenigstens einen die Führung des neuen Filters (20) ermöglichenden Flansch (32) und wenigstens einen Flansch (21) aufweist, auf dem das neue Filter (20) dichtend befestigt werden kann.

3. Vorrichtung nach Anspruch 2, dadurch gekennzeichnet, dass die Dichtigkeit zwischen dem Grundtragrahmen (7) und dem Abdichtblech einerseits und die Dichtigkeit zwischen zwei zusätzlichen Tragrahmen (19) oder zwischen einem zusätzlichen Tragrahmen (19) und dem Grundtragrahmen (7) durch Dichtungen (27, 39) aus Silastène® sichergestellt ist.

4. Verfahren zum Ausbringen eines Grundtragrahmens (7) und wenigstens eines zusätzlichen Tragrahmens (19), die in einer Vorrichtung zum Ersetzen eines in einem Tank (1) angeordneten Filters (6) verwendet werden, welcher wenigstens einen kontaminierten Bereich (2) und einen nicht kontaminierten Bereich (3) aufweist, die durch ein eine Öffnung (5) aufweisendes Abdichtblech (4) voneinander getrennt sind, wobei die Tragrahmen (7, 19) aufeinandergestapelt sind und der Stapel eine maximale Höhe nach einer gewissen Anzahl von ersetzten Filtern hat, dadurch gekennzeichnet, dass das Verfahren die folgenden Schritte umfasst:

— beim letzten Ersetzen, wobei das Filter (6) herausgenommen und die Öffnung (5) von einer dichten Membran (18) verschlossen ist, umhüllt man den Stapel der Tragrahmen (7, 19) mit einem dichten Sack aus einem weichen Material, den man dichtend an der äusseren Umgebung eines Rahmens (34) zum Herausnehmen befestigt, der dichtend auf dem Abdichtblech (4) auf der Seite des nicht kontaminierten Bereiches (3) des Tanks und ausserhalb des Grundtragrahmens (7) befestigt ist,

— man löst den Grundtragrahmen (7) von dem Abdichtblech und ordnet den Stapel von Tragrahmen (7, 19) am Boden des dichten Sackes an,

— man verschweisst den Sack an zwei Stellen und schneidet ihn zwischen den zwei Schweissstellen derart durch, dass einerseits ein dicht geschlossener, den Tragrahmenstapel enthaltender Sack und andererseits eine dichte Membran erhalten wird, die den kontaminierten Bereich (2) und den nicht kontaminierten Bereich (3) des Tanks voneinander trennt,

— man dekontaminiert den Tank, entfernt die vorgenannte, dichte Membran und bringt den oder die Grundtragrahmen (7) an seine bzw. ihre Stelle zurück.

5. Vorrichtung zum Ausbringen eines Grundtragrahmens (7) und wenigstens eines zusätzlichen Tragrahmens (19), die in einer Vorrichtung zum Ersetzen eines in einem Tank (1) angeordneten Filters (6) verwendet werden, welcher wenigstens einen kontaminierten Bereich (2) und einen nicht kontaminierten Bereich (3) aufweist, die mit einem eine Öffnung (5) aufweisenden Abdichtblech (4) getrennt sind, dadurch gekennzeichnet, dass die Vorrichtung umfasst wenigstens einen Rahmen (34) zum Ausbringen, der dichtend auf dem Abdichtblech auf der Seite des nicht kontaminierten Bereiches (3) des Tanks und ausserhalb des Grundtragrahmens (7) befestigt ist, dass der Rahmen (34) zum Ausbringen wenigstens einen seine dichtende Befestigung auf dem Abdichtblech ermöglichenden Flansch (35) und wenigstens einen die dichtende Befestigung eines zum Ausbringen der Tragrahmen (7, 19) verwendeten, dichten Sackes aus weichem Material ermöglichenden Flansch (36) aufweist.

6. Vorrichtung nach Anspruch 5, dadurch gekennzeichnet, dass die Dichtigkeit zwischen dem Rahmen (34) zum Ausbringen und dem Abdichtblech (4) durch wenigstens eine Dichtung aus Silastène® sichergestellt ist.

FIG. 1

0 045 696

FIG. 2a

FIG. 2b

FIG. 2c

FIG. 2_d

FIG. 2_e

FIG. 3_a

FIG. 3_b